# EUROPEAN PATENT SPECIFICATION

(11) **EP 0 321 694 B1**
(45) Date of publication and mention of the grant of the patent: **07.06.1995**
(21) Application number: 88118951.8
(22) Date of filing: 14.11.1988
(51) Int. Cl.: G06F 15/16

(54) **Method for a Data processing system using incompatible central processing unit/operating system combinations**
Verfahren für ein Datenverarbeitungssystem mit Verwendung von nichtkompatiblen Zentralverarbeitungseinheit/ Betriebssystem- Kombinationen
Méthode pour un Système de traitement de données utilisant des combinaisons d'unité centrale de traitement/système opérationnel incompatible

(30) Priority: 21.12.1987 US 136058
(43) Date of publication of application: 28.06.1989
(73) Proprietor: Bull HN Information Systems Inc., Billerica, MA 01821-4186 (US)
(72) Inventor: Curley, John L., North Andover Massachusetts 01845 (US); Hirsch, Thomas S., Bedford Massachusetts 01730 (US); Penney, John C., Chelmsford Massachusetts 01824 (US); Reisch, Ileana S., Carlisle Massachusetts 01841 (US); Sandini, James M., Clinton Massachusetts 01510 (US); Staplin, Theodore R., Jr., Chelmsford Massachusetts 01824 (US); Wurz, David A., Winchester Massachusetts 01890 (US)
(74) Representative: Altenburg, Udo, Dipl.-Phys.

(56) References cited:
- EP-A- 0 147 574
- EP-A- 0 192 944
- EP-A- 0 205 943
- WO-A-83/04117
- GB-A- 2 204 432
- PATENT ABSTRACTS OF JAPAN, vol. 9, no. 277 (E-355)[2000], 6th November 1985;& JP-A-60 120 636 (TSUBAKIMOTO K.K.) 28-06-1985
- HEWLETT-PACKARD JOURNAL, vol. 39, no. 5, October 1988, pages 33-36, Palo Alto,CA, US; P.E. SCOTT et al.: "Boot mechanism for discless HP-UX"
- IEEE ELECTRO, vol. 7, May 1982, pages 33/4 1-11, New York, US; J. PARADISE:"CDP1800-series multiprocessing for maximum performance"

## Description

### BACKGROUND OF THE INVENTION

### 1. Field of the Invention

This invention relates generally to data processing systems and, more particularly, to data processing systems having a plurality of central processing units.

### 2. Description of the Related Art.

In order to increase the processing capability of data processing systems, one technique has been to couple additional central processing units to the system. A composite data processing system using multiple standalone processing systems is disclosed, for example, in the European patent application EP-A-0 205 943. This composite system comprises a business-computer host system interconnected to a personal-computer auxiliary system so that the latter can perform multiple functions for the former, as well as executing its own application programs. A dual-port memory appears in the address space of each system, so that data and program commands can be transferred directly between the two systems. This configuration allows each system to use the I/O devices attached to the other. A virtual channel adapter is connected as an I/O-terminal controller to the host system, but, instead of controlling an actual workstation terminal, it activates an emulator in the auxiliary system which effectively converts that system temporarily into a workstation terminal for the host system. The actual terminal commands to be emulated and their data blocks move from the host system to the auxiliary system via the dual-port memory.

In EP-A-0 147 574 a method is disclosed whereby an operator at a first workstation has the possibility to cause a queue of jobs to be stated at a second workstation in order to use its resources.

Data processing systems having a plurality of central processing units typically have one of two configurations.

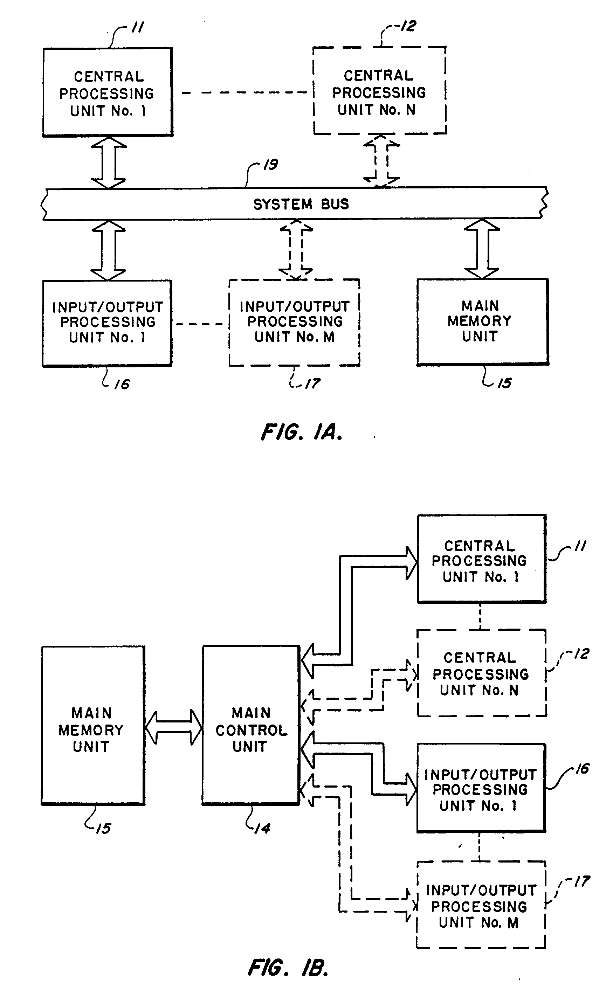

Referring now to Fig. 1A, a data processing system having a plurality of central processing units, according to a first implementation found in the prior art, is shown. The data processing system includes a plurality of central processing units 11-12 coupled to a system bus 19. The central processing units 11-12 perform the actual manipulation of data groups under control of operating and user software programs. The main memory unit 16, also coupled to the system bus 19, stores the data and program signal groups which are currently being used by the central processing units. The input/output units 14-15, coupled to the system bus 19, include devices for storage of large quantities of data and program signal groups, e.g., disk storage devices, terminals for the entry of data by system users, and communication devices for exchange of data and program groups with remote locations. The system bus 19 provides the principal path for the exchange of data and program groups between the components of the data processing system.

Referring next to Fig. 1B, a second implementation of a multiprocessor system, according to the related art, is shown. Generally, the same components are available to perform the processing functions as in Fig. 1A except that the components are coupled by a memory control unit 14 instead of by the system bus 19. The memory control unit 14 is typically an electronic switch providing the coupling of the data processing unit component in response to control signals. The memory control unit 14 can also provide functionality, such as conflict resolution, that would typically be distributed in the bus oriented system data processing system.

The data processing systems of Fig. 1A and Fig. 1B are typically implemented in the related art such that the central processing units are homogeneous. In a homogeneous data processing system, the operating systems are the same or similar, the implementing apparatus is the same or similar and the operations performed on apparatus external to the data processing system is the same or similar. Even though the central processing units are homogeneous, substantial efforts are employed to prevent conflicts between the central processing units. For example, one of the central processing systems can be selected to allocate resources and tasks among the plurality of central processing units, thereby preventing conflicts between simultaneously executing programs of the data processing system. The resources of the system are the storage devices, terminals, main memory locations and other data processing facilities to which a central processing unit has access for the purpose of performing the data processing functions. This relationship is generally referred to as the master/slave relationship because of the control asserted by the selected processor. However, some data processing systems can be designed wherein the central processing units, operating under control of the same operating system, can operate under as equal members (as contrasted with the master/slave relationship) of the data processing system. The following references provide examples of the way in which a plurality of central processing units can be incorporated in a data processing system without requiring a master/slave relationship and yet still avoiding conflicts for system resources.

In U.S. Patent 3,631,405, issued December 28, 1971, entitled SHARING OF MICROPROGRAMS BETWEEN PROCESSORS and invented by G. S. Hoff and R. P. Kelly, two microprogrammed processing units share control elements that permit sharing of microprogram repertoires. By appropriate invocation of the operating system, the control signals from a first microprogrammed processing unit are transferred to the second microprogrammed processing unit. In fact, this configuration can best be described as a single processing unit with resources allocated by a supervisor controlled operating system. The use of a supervisor program as well as the coupling between the two processing units distinguishes this configuration from the peer processing unit relationship described in the present invention.

In U.S. Patent 4,131,941, issued December 26, 1978, entitled LINKED MICROPROGRAMMED PLURAL PROCESSOR UNIT and invented by H. L. Siegel, G. F. Muething, Jr., and E. J. Radkowski, a configuration of a plurality of processors is described that permits the processors to act independently or to be reconfigured so that a master/slave relationship can be invoked. The plurality of processors are linked together and, even when operating in a mode described as being independent, are not independent but subject to a supervisory control structure for configuration determination and for allocation of activity. Of course, the control of the allocation of activities implies the control of the allocation of resources. In addition, the data processing system described by this U.S. Patent, either has one operating system or a plurality of identical operating systems. The invention of the U.S. Patent appears to be best described as a single data processing system with a controllable configuration. The present invention is directed to data processing units that operate independently with different operating systems.

In U.S. Patent 4,200,930, issued on April 29, 1980, entitled ADAPTER CLUSTER MODULE FOR DATA COMMUNICATIONS SUBSYSTEM invented by R. L. Rawlings and R. D. Mathews, a host processing unit can have a plurality data communications subsystems coupled thereto for performing routine communications functions with incoming and outgoing signals. Although the data communications subsystems are capable, in case of a failure of the host processing unit, of continuing communications, the role of the host processing unit to the data communications subsystems is clearly that of a master/slave relationship. The peer processor relationship is not applicable because the data communications subsystems do not have access to all the resources available to the host processing unit.

In the U.S. Patent 4,722,048, entitled MICROCOMPUTER SYSTEM WITH INDEPENDENT OPERATING SYSTEMS, two processors, an LSI-6 processor with a MOD400 operating system and an Intel 8086 processor with either and MS-DOS or a CPM-86 operating share the processing responsibilities (a Motorola 6809 microprocessor is also included, but generally functions as an input/output controller). The LSI-6 processor has memory space that is not accessible to the Intel 8086 processor. In addition, the input/output operations performed by the 6809 microprocessor can be initiated only by the LSI-6 processor, so that the Intel 8086 has access to this resource only through the intervention of the LSI-6 processor, a form of a master/slave relationship.

In the U.S. Patent 4,862,354, entitled MULTIPROCESSOR SYSTEM ARCHITECTURE, the communication of two processors is described. In this application, the sharing of memory without interference is accomplished by controlling buses associated with each processor system. The buses are coupled to particular areas of memory and for one processor to access the memory dedicated to the second processor, the bus of the first processor is coupled to the bus of the second processor. Apparatus associated with each bus controls the ability of the other processor to access the bus, thereby effectively limiting access of each central processing unit to the system resources.

More recently, interest has been demonstrated in data processing systems incorporating a plurality of central processing units having non-homogeneous (generally incompatible) characteristics. The availability of non-homogeneous central processing units can be particularly advantageous to a system user providing a plurality of program repertoires that may normally be unavailable to the system user. Ideally, all of the central processing units should have a peer relationship, i.e., should be capable of accessing all data processing system resources without the benefit of auxiliary protection mechanisms described in relation to the related art and without having a master/slave relationship in which one central processing unit controls all the activity and allocation of resources. Many central processing systems do not have the necessary hardware and/or software functionality to enforce allocation of resources. Non-the-less, the peer relationship between central processing units is a desirable multiprocessor relationship, allowing easy expandability of the processing system.

A need has therefore been felt for technique that permits data processing system users to utilize the capabilities of non-homogeneous (incompatible) of central processing unit/operating system combinations. In this way, data processing system users have available a greatly expanded repertoire of programs from different operating system without extensive reprogramming efforts and without elaborate emulation techniques.

### SUMMARY OF THE INVENTION

It is an object of the present invention to provide an improved data processing system that overcomes the problems of the prior art.

It is a feature of the present invention to provide an improved data processing system having a plurality of central processing units.

It is another feature of the present invention to provide an improved data processing system having a plurality of central processing units utilizing different operating systems.

It is a further feature of the present invention to provide an improved data processing system in which a plurality of central processing units execute instructions under different operating systems.

It is more particular feature of the present invention to provide a technique permitting a user to utilize conveniently two operating systems.

It is yet another feature of the present invention to permit a data processing system user to have available the execution capabilities of two normally incompatible central processing unit/operating system combinations.

The aforementioned and other features are accomplished, with the method as set out in claim 1, whereby a plurality of operating system/central processing combinations, to be coupled in data processing unit, have appropriate mechanisms to prevent intentional or unintentional use of resources that have not been assigned to the operating system/central processing unit combination. The central processing unit/operating system combinations are coupled to the data processing system to provide a peer relationship therebetween. A command is provided that permits a user, interacting with a first central processing unit/operating system, to transfer the interaction to a second central processing unit/operating system.

These and other features of the invention will be understood upon reading of the following description along with the drawings.

### BRIEF DESCRIPTION OF THE DRAWINGS

Figure 1A is a block diagram of a bus oriented data processing system having a plurality of central processing units according to the related art, while Fig. 1B is a block diagram of a memory controller oriented data processing system having a plurality of central processing units according to the prior art.

Figure 2A illustrates the apparatus for implementing a peer processor relationship in a multiprocessor data processing system, while Fig. 2B illustrates the partitioning of main memory storage in a peer processor relationship.

Figure 3 illustrates additional components that can be required for a multiprocessor data processing system having a peer relationship.

Figure 4 illustrates a typical screen available to a user to determine the user interaction mode.

Figure 5A and 5B illustrate a first transfer mode and a second transfer mode, respectively, for permitting a user interacting with a first central processing unit under control of a first operating system to access a second central processing unit under control of a second operating system.

### DESCRIPTION OF THE PREFERRED EMBODIMENT

### 1. Detailed Description of the Figures

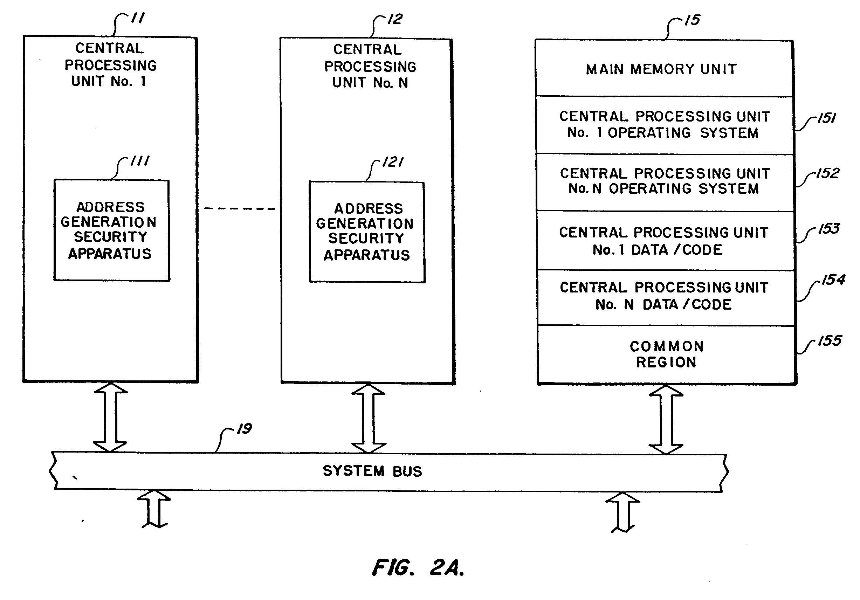

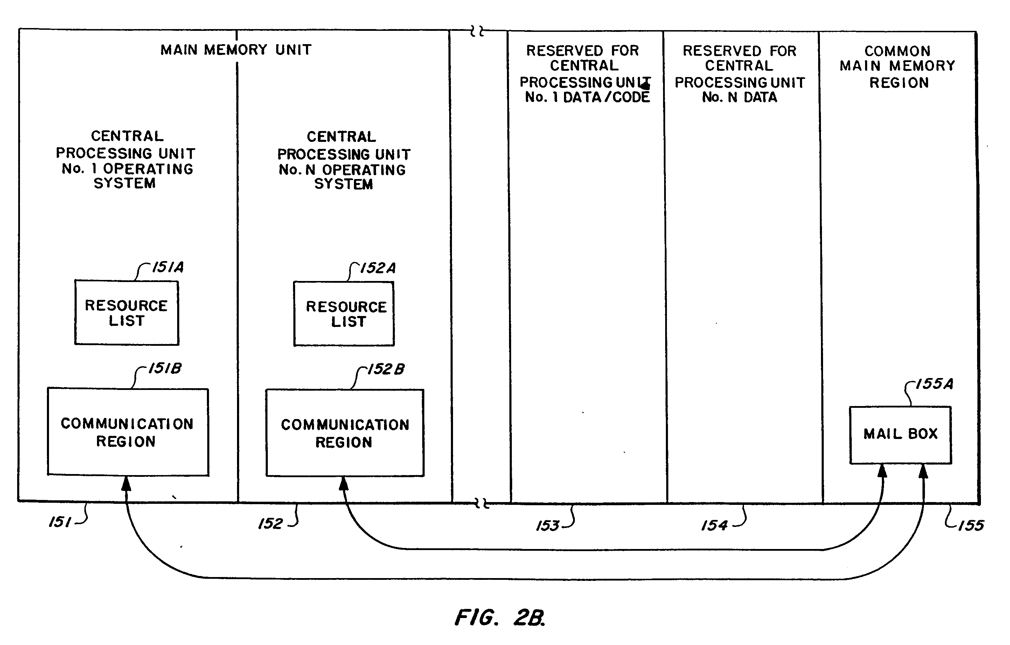

Referring to Fig. 2A, the principal components that permit the central processing units of a data processing system of multiprocessor data processing system to assume a peer relationship are illustrated. Each central processing unit has associated therewith apparatus, software procedures or a combination of apparatus and software programs that prevent the generation of addresses or attempts to access input/output devices are nominally unavailable to the central processing unit. This apparatus is illustrated as address generation apparatus 111 as part of central processing unit 11 and address generation security apparatus 121 as part of central processing unit 12. The main memory unit is divided into a plurality of regions. Region 151 is a region reserved for the operating system controlling the operation of central processing unit 11, while region 152 is a portion of the main memory unit reserved for the operating system controlling operation of the central processing unit 12. The portion of the main memory unit denoted by region 153 is reserved for the data/code for the central processing unit 11, while the region 154 is reserved for the data/code of central processing unit 12. Region 155 is a common region and accessible to both central processing unit 11 and central processing unit 12.

Referring to Fig. 2A, more detail in the allocation of the storage of the main memory unit is shown symbolically. The regions 151 and 152 reserved for operating systems of the associated central processing unit each have two subregions (151A and 151B, and 152A and 152B, respectively) important for operation of a peer relationship. The subregions 151A and 152A provide a list of the resources, i.e., input/output devices and reserved main memory regions, reserved for the associated central processing unit. Subregions 151B and 152B provide the procedure by which the two central processing systems can communicate. In the preferred embodiment, this communication is performed through subregion 155A of the portion of main memory reserved for usage by both the central processing units using a technique typically referred to as a data processing system mail box. In this technique, a message is left in the mail box 155A by a first central processing unit and a second central processing unit either reads the contents of the mail box periodically or is alerted by the first central processing unit that a message is available. Upon reading of the contents of the mail box 155A, the second central processing unit can make an appropriate response.

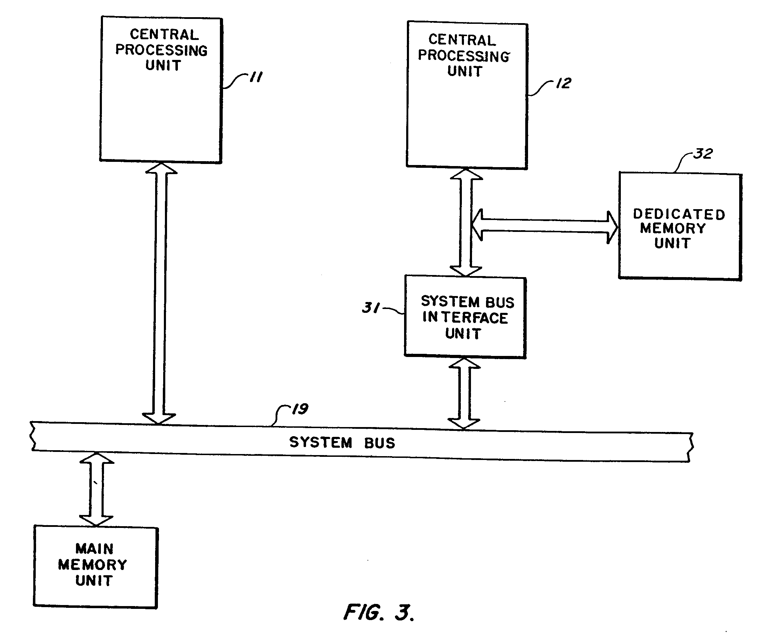

Referring next to Fig. 3, a portion of a data processing system with two central processing units 11 and 12 is shown. Central processing unit 11 is directly coupled to the system bus 19. Central processing unit 12 is coupled to the system bus 19 by system bus interface unit 31. The system bus interface unit and the central processing unit 12 are coupled to dedicated memory unit 32.

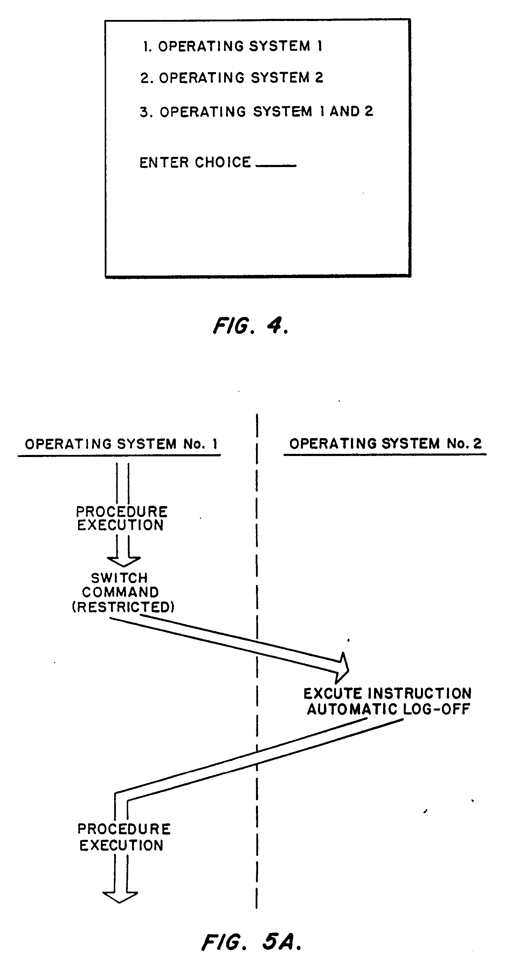

Referring next to Fig. 4, a possible menu available to a user during a log-on procedure is illustrated. The user is provided with three choices during the log-on procedure. The user can access either central processing unit (and associated operating system) exclusively or can access both central processing units. In the preferred embodiment, the access rights of the user are compared with the request resulting from the menu.

Referring next to Fig. 5A, a diagram of one mode for transferring from a first central processing system to a second central processing system is shown. In this transfer mode, a switch (restricted) command is entered by the user interacting with operating system 1. This (restricted) switch command permits a user with appropriate access rights to execute a single procedure by operating system 2. The result of the (restricted) switch command is the transfer of the procedure to the operating system 2 where the single procedure is executed. After the execution of the single procedure, an automatic log-off procedure from operating system 2 is instituted and the control of the program execution is returned to operating system 1.

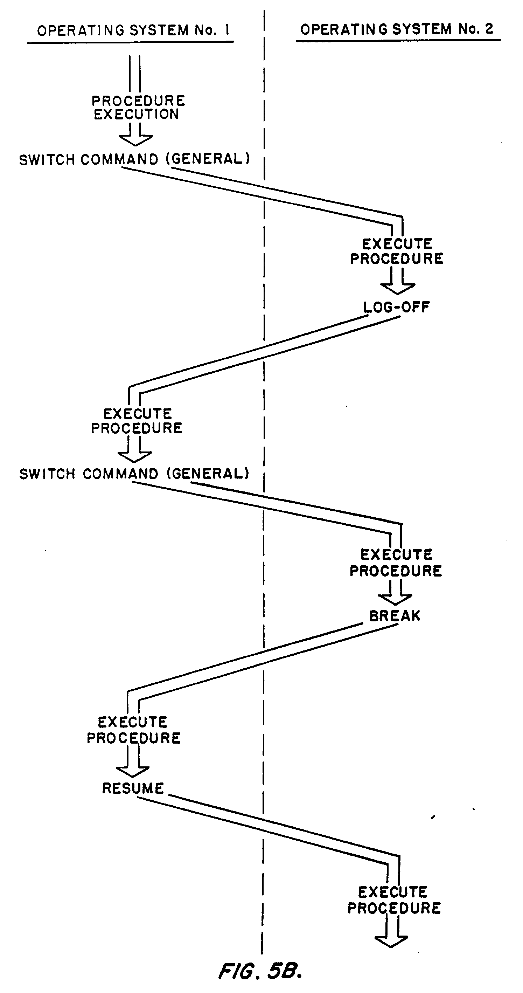

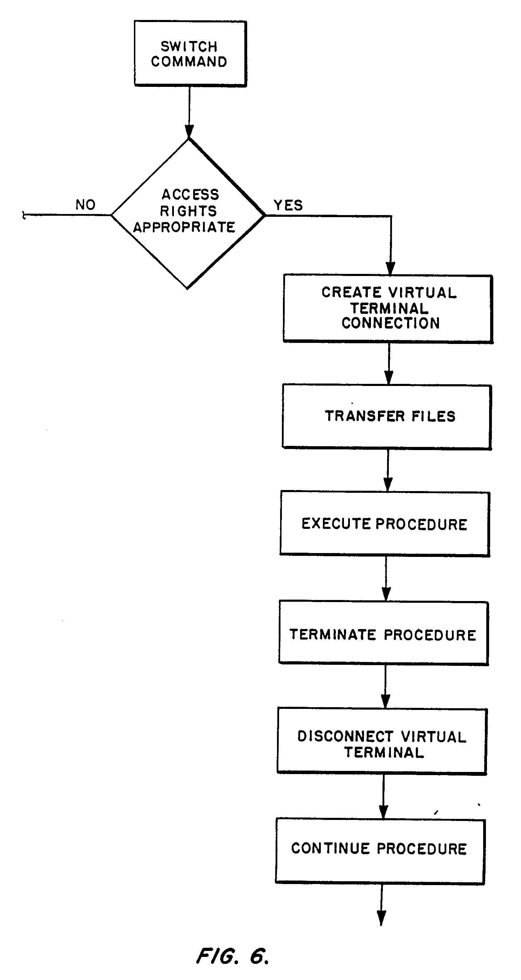

Referring to Fig. 5B, a second (general) switch command is illustrated. With this command, the control of the procedure is transferred to operating system 2, however, the return to the first operating system occurs only in response to a positive activity. In one instance, a log-off command while under operating system 2 returns the control of the procedure to operating system 1 until another switch command is executed.

### 2. Operation of the Preferred Embodiment

In a ideal multiprocessor configuration, all of the central processing units would have access to all the resources of the data processing system, i.e., have a peer relationship. However, many central processing unit/operating system combinations are incompatible which, in the past, has limited the data processing systems in which the central processing unit/operating system combinations have a peer relationship to data processing systems with substantially the same central processing unit/operating system combinations. The data processing systems in which the central processing unit/operating system have a peer relationship is further limited because many central processing unit/operating system combinations do not have trustworthy access enforcement mechanisms which can result in addressing reserved resources. In the Patent Application EP 88 119 577.0, entitled "APPARATUS AND METHOD FOR A DATA PROCESSING SYSTEM HAVING A PEER RELATIONSHIP AMONG A PLURALITY OF CENTRAL PROCESSING UNITS", the apparatus and method for a data processing system having non-homogeneous (i.e., incompatible) central processing unit/operating system combinations coupled thereto is disclosed for central processing unit/operating system combinations in which system resource access enforcement mechanisms are present. In the Patent Application EP 88 119 578.8, entitled "APPARATUS AND METHOD FOR ALTERABLE RESOURCE PARTITIONING ENFORCEMENT IN A DATA PROCESSING SYSTEM HAVING CENTRAL PROCESSING UNITS USING DIFFERENT OPERATING SYSTEMS", a data processing system is disclosed for a data processing system having non-homogeneous (i.e., incompatible) central processing unit/operating system combinations coupled thereto is disclosed for central processing unit/operating system combinations in which system resource access mechanisms are not present.

In the preferred embodiment, the host central processing unit 11 is a Honeywell Bull MRX data processing system operating under control of the MOD 400 operating system. The MOD 400 operating system includes procedures that provide for the trustworthiness of the system. In order to provide the data processing system with the capability of executing the wide repertoire of user programs using the UNIX operating system, the central processing unit 12 was selected. The UNIX operating system available for executing the user programs was believed to lack, at present, the appropriate mechanisms for secure partitioning of resources in the multiprocessor environment.

Although the peer processing relationship provides an equality between the central processing units of the data processing system with respect to resources and activity, two situations must be provided for in order to accommodate special circumstances. The first of the special circumstances relates to the protocol used by the system to exchange data signals. Related to the system bus protocol is the organization of main memory unit. Typically, a "host" central processing unit 11 will be adapted to operate with a system bus and will not require additional manipulation of data groups when transferring the data groups to the system bus. However, the "guest" central processing unit, in general adapted to operate with different system bus protocol, will require a system bus interface unit 31 to permit the transfer of the signal groups between the central processing unit 12 and the system bus. The system bus interface unit 31, to the extent not possible by the central processing unit 12, can develop appropriate control signals and, where necessary, adjust the size of the data groups to be consistent with the remainder of the data processing system. The second situation involved the fact that special procedures, such as special input/output procedures can be executable only by a selected operating system or central processing unit/operating system combinations. To obtain the peer relationship in this situation, a procedure is developed in which the selected operating system or central processing unit/operating system combination executes the special procedure on behalf of the central processing unit/operating system combination requiring execution of the special procedure. These two situations as well as other situations impeding the use of incompatible central processing unit/operating system combinations in a peer relationship in a data processing system are discussed in detail in the above-identified U.S. Patent Application.

The switch command provides the mechanism for permitting a user of the data processing system to transfer of interaction with a first operating system to interaction with a second operating system. As a result of the switch command, the user terminal is coupled to the central processing unit with the second operating system. Any files that are required by the second processing system, but which are not available, can be made available by reallocation of resources, can be transferred to an allocated area by a communication (e.g., kermit) type protocol. All communication is performed between the two operating systems by a shared group of locations in main memory.

The switch command and related procedure permits convenient use of the central processing unit/operating system combinations and resources in data processing system in which the peer relationship exists. The implementing procedures are invisible to the data processing system user who has access to the computing capability and the resources of the entire data processing system. The ability to incorporate normally incompatible central processing unit/operating system combinations into the data processing system and to utilize special execution characteristics of the combinations permits a user greater flexibility in the execution of his processing requirements.

## Claims

1. Method of processing data in a multi-processor system having first (12) and second (11) processors coupled together for communication, said first processor (12) operating under control of a first operating system (152) and said second processor (11) operating under control of a second operating system (151) which is incompatible with the first operating system (152), for enabling said first processor (12) to utilize a service of said second operating system (151), characterized by:
- said first processor (12) allowing a user to initiate execution of a particular instruction (SWITCH) under said first operating system (152);
- initiation of said particular instruction (SWITCH) causing the transfer of a single procedure to said second processor (11) to execute said procedure; and
- following execution of said single procedure, terminating execution by said second processor (11), automatically logging-off from said second operating system and returning control of the program execution to said first operating system.

2. The method of claim 1, wherein said second processor (11) comprises a plurality of data processing resources (15, 16, 17) and said second operating system (151) has accessible thereto a list (111) identifying certain ones of said resources usable only by said second processor (11), said method being further characterized by:
- the execution of said particular instruction (SWITCH) by said first processor (12) indicating a need by said first processor (12) to have one of said certain ones of resources perform a data processing service on behalf of said first processor (12).

3. The method of claim 1 or claim 2, wherein said first processor (12) and said first operating system (152) form a first system combination and said second processor (11) and said second operating system (151) form a second system combination, further characterized in that user interaction is permitted with said first system combination (12, 152) and with said second system combination (11, 151), both system combinations (12, 152; 11, 151) being allowed to access a common region (155) in a main memory (15), and wherein said user interaction is effected via said data processing resources, at least one of these resources being a user terminal.

4. The method of claim 3, further characterized in that said user terminal (16, 17) is being dynamically allocated to said first and said second system combination (12, 152; 11, 151) over a communication path including a system bus (19) which path is established in response to signals from said user terminal.

5. The method of claim 3, further characterized by implementing a command permitting change of user interaction when interacting with said first system combination (12, 152) to interact with said second system combination (11, 151) and by automatically returning to interaction with said first system combination (12, 152) after completion of interaction with said second system combination (11, 151).

## Patentansprüche

1. Verfahren zum Verarbeiten von Daten in einem Multiprozessor-System mit einem ersten (12) und einem zweiten (11) Prozessor, die zur Kommunikation zusammengekoppelt sind, wobei der erste Prozessor (12) unter der Steuerung eines ersten Betriebssystems (152) arbeitet, und der zweite Prozessor (11) unter der Steuerung eines zweiten Betriebssystems (151) arbeitet, welches mit dem ersten Betriebssystem (152) nicht kompatibel ist, und zwar um den ersten Prozessor (12) zu befähigen, einen Dienst des zweiten Betriebssystems (151) zu benutzen, gekennzeichnet durch:
- einen ersten Prozessor (12), der es einem Anwender erlaubt, die Ausführung einer bestimmten Anweisung (SWITCH) unter dem ersten Betriebssystem (152) einzuleiten;
- Einleitung der bestimmten Anweisung (SWITCH), was den Transfer einer einzelnen Prozedur an den zweiten Prozessor (11) veranlaßt, um diese Prozedur auszuführen; und
- nachfolgend der Ausführung der einzelnen Prozedur, Beenden der Ausführung durch den zweiten Prozessor (11), automatisches Ausloggen aus dem zweiten Betriebssystem und Zurückgeben der Steuerung der Programmausführung an das erste Betriebssystem.

2. Verfahren gemäß Anspruch 1, wobei der zweite Prozessor (11) eine Vielzahl von Datenverarbeitungs-Betriebsmittel (15, 16, 17) aufweist und wobei das zweite Betriebssystem (151) eine darauf zugreifbare Liste (111) aufweist, welche bestimmte Betriebsmittel angibt, die nur vom zweiten Prozessor (11) verwendbar sind, wobei das Verfahren weiterhin gekennzeichnet ist durch:
- die Ausführung der bestimmten Anweisung (SWITCH) durch den ersten Prozessor (12), was einen Bedarf des ersten Prozessors (12) anzeigt, ein Betriebsmittel der bestimmten Betriebsmittel einen Datenverarbeitungsdienst namens des ersten Prozessors (12) ausführen zu lassen.

3. Verfahren gemäß Anspruch 1 oder 2, wobei der erste Prozessor (12) und das erste Betriebssystem (152) eine erste Systemkombination bilden und wobei der zweite Prozessor (11) und das zweite Betriebssystem (151) eine zweite Systemkombination bilden, weiterhin dadurch gekennzeichnet, daß eine Benutzer-Interaktion mit der ersten Systemkombination (12, 152) und mit der zweiten Systemkombination (11, 151) zugelassen ist, wobei beiden Systemkombinationen (12, 152; 11, 151) erlaubt wird, auf einen gemeinsamen Bereich (155) in einem Hauptspeicher (15) zuzugreifen, und wobei die Benutzer-Interaktion über die Datenverarbeitungsbetriebsmittel bewirkt wird, wobei zumindest eines dieser Betriebsmittel ein Benutzerendgerät ist.

4. Verfahren gemäß Anspruch 3, weiterhin dadurch gekennzeichnet, daß das Benutzerendgerät (16, 17) dynamisch auf die erste und die zweite Systemkombination (12, 152; 11, 151) über einen Kommunikationsweg zugewiesen wird, welcher einen Systembus (19) aufweist und welcher in Antwort auf Signale vom Benutzerendgerät eingerichtet wird.

5. Verfahren gemäß Anspruch 3, weiterhin gekennzeichnet durch das Implementieren eines Befehls, der die Änderung der Benutzer-Interaktion erlaubt, wenn mit der ersten Systemkombination (12, 152) interagiert wird, um mit der zweiten Systemkombination (11, 151) zu interagieren, und durch das automatische Zurückkehren zur Interaktion mit der ersten Systemkombination (12, 152) nach Abschluß der Interaktion mit der zweiten Systemkombination (11, 151).

## Revendications

1. Méthode de traitement de données dans un système à multiprocesseur ayant un premier (12) et un deuxième (11) processeurs couplés ensemble pour communiquer, ledit premier processeur (12) fonctionnant sous le contrôle d'un premier système opérationnel (152) et ledit deuxième processeur (11) fonctionnant sous le contrôle d'un deuxième système opérationnel (151) qui est incompatible avec le premier système opérationnel (152), pour permettre audit premier processeur (12) d'utiliser un service dudit deuxième système opérationnel (151), caractérisée par :
- ledit premier processeur (12) permettant à un utilisateur de lancer l'exécution d'une instruction particulière (COMMUTATION) dans ledit premier système opérationnel (152) ;
- le lancement de ladite instruction particulière (COMMUTATION) provoquant le transfert d'une procédure unique vers ledit deuxième processeur (11) pour exécuter ladite procédure ; et
- l'exécution suivante de ladite procédure unique, terminant l'exécution par ledit deuxième processeur (11), fermant automatiquement la session depuis ledit deuxième système opérationnel et retournant le contrôle de l'exécution du programme audit premier système opérationnel.

2. Méthode selon la revendication 1, dans laquelle ledit deuxième processeur (11) comprend une pluralité de ressources de traitement de données (15, 16, 17) et ledit deuxième système opérationnel (151) a, accessible à celles-ci, une liste (111) identifiant certaines desdites ressources utilisables seulement par ledit deuxième processeur (11), ladite méthode étant en outre caractérisée par :
- l'exécution de ladite instruction particulière (COMMUTATION) par ledit premier processeur (12) indiquant un besoin dudit premier processeur (12) d'avoir une parmi certaines desdites ressources exécutant un service de traitement de données à la place dudit premier processeur (12).

3. Méthode selon la revendication 1 ou la revendication 2, dans laquelle ledit premier processeur (12) et ledit premier système opérationnel (152) forment une première combinaison de systèmes, et ledit deuxième processeur (11) et ledit deuxième système opérationnel (151) forment une deuxième combinaison de systèmes, caractérisée en outre en ce que l'interaction de l'utilisateur est permise avec ladite première combinaison de systèmes (12, 152) et avec ladite deuxième combinaison de systèmes (11, 151), les deux combinaisons de systèmes (12, 152 ; 11, 151) pouvant accéder à une région commune (155) dans une mémoire principale (15), et dans laquelle ladite interaction de l'utilisateur s'effectue par l'intermédiaire desdites ressources de traitement de données, au moins une de ces ressources étant un terminal d'utilisateur.

4. Méthode selon la revendication 3, caractérisée en outre en ce que le terminal d'utilisateur (16, 17) est dynamiquement attribué auxdites première et deuxième combinaisons de systèmes (12, 152 ; 11, 151) par un chemin de communication comprenant un bus de système (19) dont le chemin est établi en réponse à des signaux depuis ledit terminal d'utilisateur.

5. Méthode selon la revendication 3, caractérisée en outre par l'exécution d'une commande permettant de changer l'interaction de l'utilisateur lorsque qu'il y a interaction avec ladite première combinaison de systèmes (12, 152), pour interagir avec ladite deuxième combinaison de systèmes (11, 151) et en retournant automatiquement en interaction avec ladite première combinaison de systèmes (12, 152) après exécution de l'interaction avec ladite deuxième combinaison de systèmes (11, 151).
